# EUROPEAN PATENT SPECIFICATION

(11) **EP 2 032 843 B1**
(45) Date of publication and mention of the grant of the patent: **18.07.2018**
(21) Application number: 07732865.6
(22) Date of filing: 17.05.2007
(51) Int. Cl.: F03D 17/00, E02B 17/00, F03D 13/20, F03D 1/06, F03D 3/06

(54) **A TURBINE BLADE SUPPORT ASSEMBLY**
TURBINENSCHAUFELSTÜTZANORDNUNG
ENSEMBLE DE SUPPORT POUR PALES DE TURBINE

(30) Priority: 18.05.2006 GB 0609799
(43) Date of publication of application: 11.03.2009
(73) Proprietor: Haydale Graphene Industries plc, Capel Hendre Ammanford Carmarthenshire SA18 3BL (GB)
(72) Inventor: CHAMBERS, David, Leicestershire LE11 1QJ (GB); CHAMBERS, Peter, Ronald, London NW2 4HA (GB)
(74) Representative: Dunne, Paul David
(86) International application number: PCT/GB2007/001843
(87) International publication number: WO 2007/135391

(56) References cited:
- EP-A- 1 596 064
- WO-A-2006/097836
- DE-A1- 10 019 214
- FR-A- 2 850 137
- GB-A- 2 402 109
- NL-C1- 1 002 324
- US-A- 6 155 785

## Description

This invention relates to turbine blade support assemblies. This invention also relates to wind turbines incorporating turbine blade support assemblies.

Wind turbine generators are constructed with one or more blades to and rotating about an axis. With the requirement for energy from renewable sources increasing, a high demand has arisen for wind turbines to generate increasingly more power. However, factors such as cost and weight limit the design of wind turbines and, hence, amount of power that can be achieved from conventional wind turbine generators. Hub arrangements aimed at overcoming these limits are e.g. disclosed in FR2850137, DE10019214, US6155785, NL1002324 and EP1596064 . According to the invention, there is provided a turbine blade support assembly comprising a central hub, a plurality of carrying members extending outwardly from the central hub, and a respective subsidiary hub on each of the carrying members for securing a respective turbine blade to each carrying member. Each carrying member is arranged in compression.

Each carrying member is elongate and extends radially outwardly from the main hub arrangement. Each carrying member has first and second opposite end regions, the first end region being secured to the main hub arrangement and the second end region having the subsidiary hub mounted thereon.

A plurality of support members is provided to support the carrying members. Each support member is elongate and may comprise a tie member. Each support member is arranged in tension. In use, the loading on at least some of the support members at different times may be such that they are in compression.

At least some of the support members extend between respective second ends of the carrying members, and/or between adjacent respective subsidiary hubs on the carrying members. The support members may extend between adjacent carrying members.

At least some of the support members may extend between the carrying members and the central hub. Where the support members extend between the carrying members and the central hub, the support members may extend from the central hub to the second end regions of the carrying members. If desired, the support members may extend from the central hub to the subsidiary hubs on the carrying members.

Where the support members extend between the carrying members and the central hub, the support members may extend to a region of the central hub forward of the carrying members and/or to the region of the central hub rearward of the carrying members. The central hub may include an extension member extending forwardly of the carrying members to which the forwardly extending support members are attached. The central hub may extend forwardly to which the rearwardly extending support members are attached.

In one embodiment, the support members may comprise cables, rods, tubes, angle members or any other suitably profiled structure.

In one embodiment, the support members have the advantages that they can reduce deflection of the carrying members and can reduce stress on the turbine blade support assembly.

The carrying members may be in the form of struts and each may have an aerofoil formation. Each aerofoil formation may comprise a flap to alter the lift thereon, for example with different wind speeds.

Each subsidiary hub may define a securing formation to secure a connecting portion of a turbine blade. The securing formation may be a recess defined in the subsidiary hub. Each subsidiary hub may comprise suitable operating means to effect a rotation of the blade about the respective subsidiary hub, for example to vary the angle of attack of the blade.

The carrying members and the subsidiary hubs may comprise corresponding securing formations to secure the subsidiary hubs to the respective carrying members. The corresponding securing formations may comprise a cavity in the respective subsidiary hub, and a projection on each carrying member to be received in the respective cavity. Alternatively, the corresponding securing formations may comprise a cavity in the carrying member and a projection on each subsidiary hub to be received by the respective cavity in the carrying member.

In one embodiment, the subsidiary hubs may be received substantially wholly within the carrying members. In this embodiment, the hub carrying member defines a recess to hold the subsidiary hub within the carrying member. The subsidiary hub may define a cavity to receive a projection on the turbine blade.

According to another aspect of this invention, there is provided a wind turbine incorporating a turbine blade support assembly as described above.

Embodiments of the invention will now be described by way of example only, with reference to the accompanying drawings, in which:
Fig 1 is a perspective view of a wind turbine;
Fig 2 is a front view showing a part of a turbine blade support arrangement;
Fig 3 is a perspective view of a turbine blade support arrangement showing a turbine blade thereon;
Fig 4 is a front view of the turbine blade support arrangement shown in Fig 3;
Fig 5 is a side view of a turbine blade support arrangement shown in Fig 3;
Fig 6 is a diagrammatic view showing the connection of a turbine blade to the blade support arrangement;
Fig 7 is a perspective view of the region for the connection of the turbine blade to the turbine blade support arrangement;
Fig 8 is a sectional side view showing the connection of a turbine blade to another embodiment of a blade support arrangement; and
Fig 9 is a sectional side diagrammatic view of the embodiment shown in Fig 8 showing a component for lifting the blade.

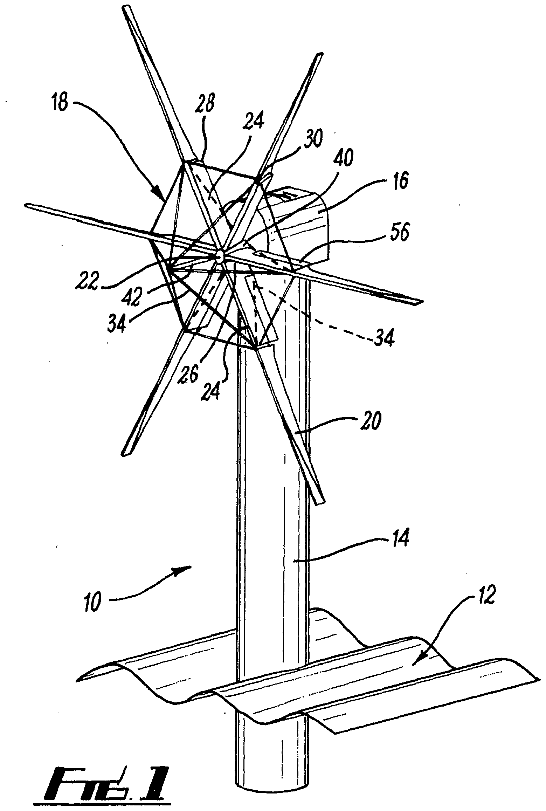

Referring to drawings, Fig 1 shows a wind turbine 10 arranged offshore, the numeral 12 designating the sea. It will be appreciated, of course, that the wind turbine 10 could be mounted on land instead of offshore. The wind turbine 10 comprises a pylon 14, and a generator assembly 16 housing the electrical generation equipment, as would be understood by those skilled in the art.

An embodiment of a turbine blade support assembly 18 is rotatably mounted on the generator assembly 16, and is operatively connected to the electrical generation equipment.

The turbine blade support assembly 18 supports a plurality of turbine blades 20. The turbine blade support assembly comprises a central hub 22, and a plurality of radially outwardly extending carrying members 24 mounted on the central hub 22. The carrying members 24 shown in Fig 1 are aerodynamically configured, and may include flaps as explained below.

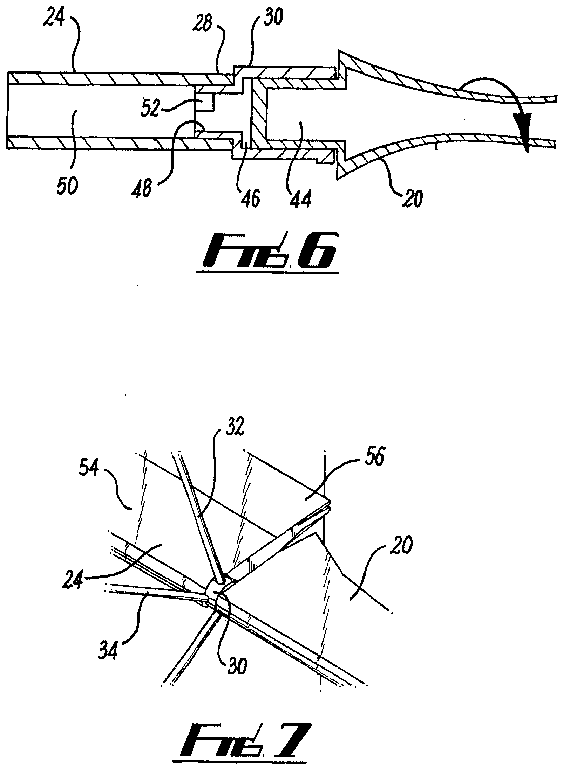

Each of the carrying members 24 has a first end region 26 at which the carrying members are connected to the main hub arrangement 22 and an opposite second end region 28 at which a subsidiary hub 30 is mounted. The subsidiary hubs 30 can be seen in more detail in Fig 6. The turbine blades 20 are connected to the carrying members 24 by the subsidiary hubs 30.

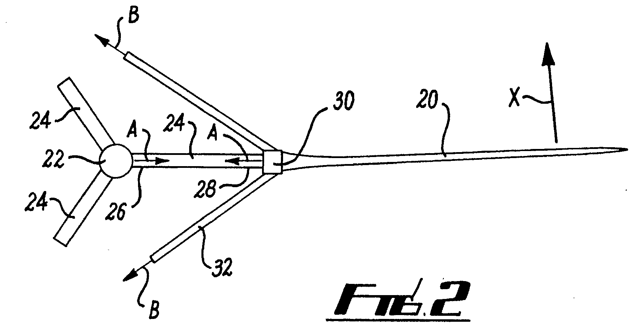

Referring to Fig 2, there is shown part of the turbine blade support arrangement 18, in which the central hub 22 is shown with one of the elongate carrying members 24 extending therefrom. The subsidiary hub 30 attached to the second end 28 of the carrying member 24. The turbine blades 20 extends radially outwardly from the subsidiary hub 30. The arrow X represents the direction of movement of the blade 20 by the wind.

Circumferential support members 32 extend in generally opposite directions to each other from the subsidiary hub 30 shown in Fig 2 to the subsidiary hub 30 of an adjacent carrier member 24. Alternatively, the circumferential support members 32 could be connected directly to the carrying members 24.

The arrows A designate the forces on the carrying member 24, indicating that it is in compression. The support members 32, on the other hand, are in tension, as shown by the arrows B designating the direction of the forces thereon.

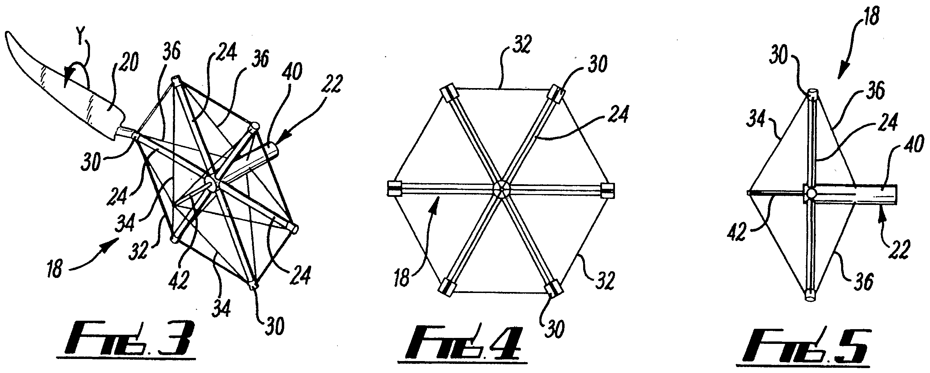

Referring to Figs 3 to 5, there is shown another embodiment of a blade support assembly 18. In the embodiment shown in Figs 3 to 5, the carrying members 24 are in the form of cylindrical struts. The central hub 22 is generally the same as the central hub 22 in Fig 1 but is shown more clearly in Figs 3 to 5. The central hub 22 comprises a central hub axle 40 which extends to the electricity generating equipment 16, and an extension member 42 extending from the central hub axle 40.

Each subsidiary hub 30 is provided with a suitable drive means (see Fig 6) for altering the angle of attack of the blade 20, e.g. as shown by the arrow Y.

Referring again to Figs 3 to 5, a plurality of generally circumferentially extending support members 32 extend from the subsidiary hubs 30 on each of the carrying members 24 to the subsidiary hub 30 on each adjacent carrying member 24. In addition to the support members 32 extending between adjacent subsidiary hub members 30, a forward radially extending support member 34 extends from each subsidiary hub 30 to the free end of the extension 42. In addition, a rearward radially extending support member 36 extends from each subsidiary hub member 30 to the axle 40. The circumferentially extending support members 32 are shown more clearly in Fig 4, and the radially extending hub members 34, 36 are shown more clearly in Fig 5.

Referring to Fig 6, there is shown a diagrammatic view of the region of the connection between a turbine blade 20 and a carrying member 24 via a subsidiary hub 30. The turbine blade 20 is provided with a projection 44 on its radially inner end which is received in a recess 46 in the subsidiary hub 30. Similarly, the subsidiary hub 30 comprise a further projection 48 which is received within a cavity 50 in the carrying member 24.

The subsidiary hub 30 is provided with suitable means, for example a motor, schematically shown at 52, rotates the blade 20 about the hub 30 as shown by the arrow Y, to vary the angle of attack of the blade 20.

Referring to Fig 7, there is shown an embodiment of the carrying member 24 which comprises a main part 54 of an aerodynamic configuration, and a flap 56 pivotally mounted on the main part 54. The flap 56 can be operated in a way known in the art to alter the lift on the carrying member 24 dependent upon wind speed and direction.

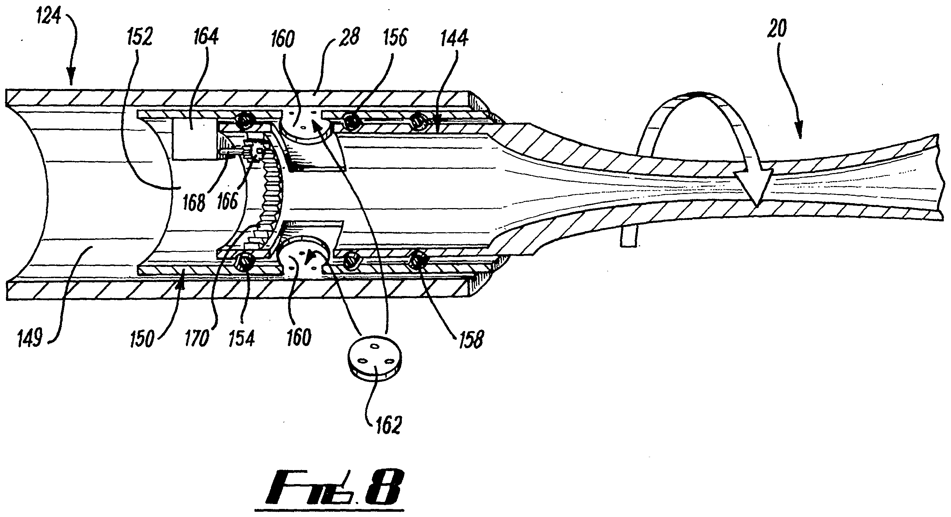

Fig 8 shows a further embodiment, in which a second end region 28 of a carrying member 124 defines a cylindrical cavity 149. A subsidiary hub 130 is mounted in the cylindrical cavity 149. The subsidiary hub 150 comprises an outer cylindrical housing 152, in which a projection 144 of the turbine to blade 20 is received. Three bearing arrays 154, 156, 158 are provided one after the other along the projection 144, between the projection 144 and the outer cylindrical housing 152. Each bearing array 154, 156, 158 extends circumferentially around the projection 144, and allows smooth relative rotation between the turbine blade 20 and the subsidiary hub 150.

The housing 152 defines a pair of opposed apertures 160, in which securing buttons 162 are received. The buttons 162 are attached to the carrying member 124, thereby securing the subsidiary hub 150 on a fixed position in the carrying member 124.

A motor 164 is mounted on the outer cylindrical housing 152. A gear cog 166 is mounted on a shaft 160 extending from the motor 164. The gear cog 166 is in meshing engagement with an annular rack 170 fixedly mounted on the projection 144. The annular rack 170 has inwardly facing teeth to engage the gear cog 166. Alternatively, the motor 164 could be fixedly mounted on the projection 144 and the annular rack could be fixedly mounted on the outer cylindrical casing 152 of the subsidiary hub 150.

Operation of the motor 164 causes the turbine blade 20 to pivot about the subsidiary hub 130, as shown by the arrow Z, or in the opposite direction.

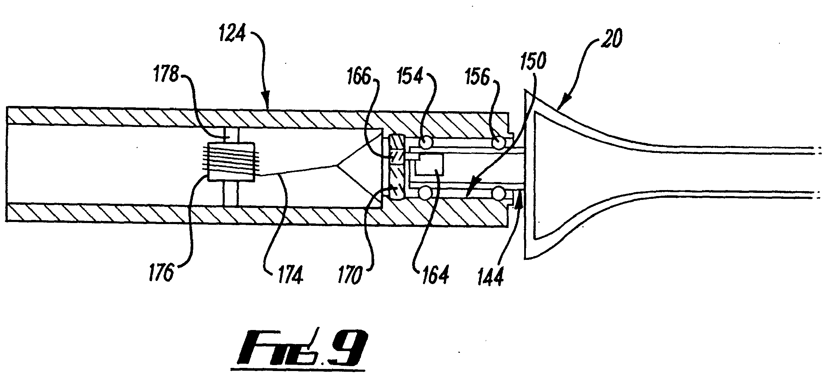

Fig 9 shows schematically the arrangement shown in Fig 8, and also shows a lifting arrangement 172 for lifting the turbine blade 20, with the subsidiary hub 130 mounted thereon. The lifting apparatus 172 lifts the subsidiary hub 130 with the turbine blade 20 and pulls the subsidiary hub 130 into the cavity 149 until it is fitted firmly in place. The lifting apparatus 172 comprises a cable 174 mounted on a winch 176. The winch 176 is rotatably mounted on a shaft 178.

The motor 164 may be an electric motor or an hydraulic motor.

In the above described embodiments, the turbine blade 20 is of the same size as normal turbine blades, but by being moved outwardly from the main hub arrangement 22, the area swept by the turbine blade 20 during its rotation about the main hub arrangement 22 is of a greater area than the area swept by the blade if it was connected directly to the main hub arrangement 22. This provides a greater amount of power produced by the blade 20. There is thus described embodiments of a blade support arrangement which support a turbine blade radially outwardly from the position at which conventional turbine blades are supported to allow the turbine blade to provide a greater amount of electrical power.

Various modifications can be made without departing from the scope of the invention.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A turbine blade support assembly (18) comprising a central hub (22), a plurality of carrying members (24,124) extending outwardly from the central hub, and a respective subsidiary hub (30,150) on each of the carrying members for securing a respective turbine blade (20) to each carrying member, **characterised in that**:
the assembly comprises a plurality of elongate support members (32,34,36) to support the carrying members, each support member being arranged in tension, each of the carrying members being in compression; wherein each carrying member is elongate and extends radially outwardly from the central hub, and having first and second opposite end regions (26,28), the first end region being secured to the central hub and the second end region having a subsidiary hub (30,150) mounted thereon, wherein at least some of the support members extend between carrying members at the second end region.

2. A turbine blade support assembly according to claim 1 wherein at least some of the support members extend from the carrying members to the central hub.

3. A turbine blade support assembly according to claim 2 wherein the support members extend to a region of the central hub forward of the carrying members and/or to the region of the hub arrangement rearward of the carrying members.

4. A turbine blade support assembly according to claim 3 wherein the central hub includes an extension member (42) extending forwardly of the carrying members to which at least some of the support members are attached.

5. A turbine blade support assembly according to any one of the proceeding claims wherein the support members comprise cables, rods, tubes, angle members or any other suitably profiled elongate structure.

6. A turbine blade support assembly according to any preceding claim wherein each subsidiary hub (30,150) comprises operating means (52,164,166,168,170) to effect a rotation of the blade about the respective subsidiary hub to vary the angle of attack of the blades.

7. A turbine blade support assembly according to claim 6 wherein the operating means comprises a motor (52,164) and a gear arrangement (166,168,170), the motor being fixedly mounted on one of the turbine blade and the subsidiary hub and the component (170) of the gear arrangement is fixedly mounted on the other of the turbine blade and the subsidiary hub.

8. A turbine blade support assembly according to claim 7 wherein the gear arrangement comprises a cog gear (166) mounted on a shaft (168) extending from the motor and an annular rack (170), the annular rack constituting the aforesaid component of the gear arrangement.

9. A turbine blade support assembly according to any preceding claim wherein each carrying member is in the form of a strut and has an aerofoil formation.

10. A turbine blade support assembly according to claim 9 wherein the aerofoil formation comprises a flap to alter the lift on the blade.

11. A wind turbine incorporating a turbine blade support assembly as claimed in any of the preceding claims.

## Patentansprüche

1. Turbinenschaufelstützanordnung (18), umfassend eine mittige Nabe (22), eine Vielzahl von Trägerelementen (24, 124), die sich von der mittigen Nabe nach außen hin erstrecken, und eine jeweilige Zusatznabe (30, 150) auf jedem der Trägerelemente, um eine jeweilige Turbinenschaufel (20) an jedem Trägerelement festzulegen, **dadurch gekennzeichnet, dass**:
die Anordnung eine Vielzahl von langgestreckten Stützelementen (32, 34, 36) zum Abstützen der Trägerelemente umfasst, wobei jedes Stützelement unter Zugspannung angeordnet ist, und jedes der Trägerelemente druckbelastet ist; worin jedes Trägerelement langgestreckt ist und sich von der mittigen Nabe radial nach außen hin erstreckt, und einen ersten und einen zweiten entgegengesetzten Endbereich (26, 28) aufweist, wobei der erste Endbereich an der mittigen Nabe festgelegt ist und der zweite Endbereich eine Zusatznabe (30, 150) aufweist, die auf diesem montiert ist, worin sich zumindest einige der Stützelemente zwischen Trägerelementen am zweiten Endbereich erstrecken.

2. Turbinenschaufelstützanordnung gemäß Anspruch 1, worin zumindest einige der Stützelemente sich von den Trägerelementen zur mittigen Nabe hin erstrecken.

3. Turbinenschaufelstützanordnung gemäß Anspruch 2, worin die Stützelemente sich zu einem Bereich der mittigen Nabe vor den Trägerelementen und/oder zu dem Bereich der Nabenanordnung hinter den Trägerelementen erstrecken.

4. Turbinenschaufelstützanordnung gemäß Anspruch 3, worin die mittige Nabe ein Erstreckungselement (42) umfasst, das sich vor den Trägerelementen erstreckt, an denen zumindest einige der Stützelemente befestigt sind.

5. Turbinenschaufelstützanordnung gemäß einem der vorangegangenen Ansprüche, worin die Stützelemente Kabel, Stangen, Rohre, Winkelelemente oder irgendeine andere entsprechend profilierte, längliche Struktur umfassen.

6. Turbinenschaufelstützanordnung gemäß einem der vorangegangenen Ansprüche, worin jede Zusatznabe (30, 150) Betriebsmittel (52, 164, 166, 168, 170) umfasst, um eine Rotation der Schaufel um die jeweilige Zusatznabe auszuführen, um den Angriffswinkel der Schaufeln zu variieren.

7. Turbinenschaufelstützanordnung gemäß Anspruch 6, worin das Betriebsmittel einen Motor (52, 164) und eine Zahnradanordnung (166, 168, 170) umfasst, wobei der Motor auf einer aus der Turbinenschaufel und der Zusatznabe ortsfest montiert ist, und die Komponente (170) der Zahnradanordnung auf der anderen der Turbinenschaufel und der Zusatznabe ortsfest montiert ist.

8. Turbinenschaufelstützanordnung gemäß Anspruch 7, worin die Zahnradanordnung ein Ritzelrad (166), das auf einer vom Motor sich erstreckenden Welle (168) montiert ist, und eine ringförmige Zahnstange (170) umfasst, wobei die ringförmige Zahnstange die vorgenannte Komponente der Zahnradanordnung darstellt.

9. Turbinenschaufelstützanordnung gemäß einem der vorangegangenen Ansprüche, worin jedes Trägerelement die Form einer Strebe und eine Schaufelblattformation aufweist.

10. Turbinenschaufelstützanordnung gemäß Anspruch 9, worin die Schaufelblattformation eine Klappe umfasst, um die Auftriebskraft auf der Schaufel zu ändern.

11. Windturbine, die, wie in einem der vorangegangenen Ansprüche beansprucht, eine Turbinenschaufelstützanordnung umfasst.

## Revendications

1. Ensemble de support de pales de turbine (18) comprenant un moyeu central (22), une pluralité d'éléments porteurs (24, 124) s'étendant vers l'extérieur à partir du moyeu central et un moyeu auxiliaire respectif (30, 150) sur chacun des éléments porteurs pour fixer une pale de turbine respective (20) à chaque élément porteur, **caractérisé en ce que** :
l'ensemble comprend une pluralité d'éléments de support allongés (32, 34, 36) pour supporter les éléments porteurs, chaque élément de support étant agencé en traction, chacun des éléments porteurs étant en compression ; dans lequel chaque élément porteur est allongé et s'étend radialement vers l'extérieur à partir du moyeu central, et comporte des première et seconde zones d'extrémité opposées (26, 28), la première zone d'extrémité étant fixée au moyeu central et la seconde zone d'extrémité ayant un moyeu auxiliaire (30, 150) monté sur celle-ci, dans lequel au moins certains des éléments de support s'étendent entre des éléments porteurs au niveau de la seconde zone d'extrémité.

2. Ensemble de support de pales de turbine selon la revendication 1, dans lequel au moins certains des éléments de support s'étendent depuis les éléments porteurs jusqu'au moyeu central.

3. Ensemble de support de pales de turbine selon la revendication 2, dans lequel les éléments de support s'étendent jusqu'à une zone du moyeu central en avant des éléments de support et/ou jusqu'à la zone de l'agencement de moyeu à l'arrière des éléments porteurs.

4. Ensemble de support de pales de turbine selon la revendication 3, dans lequel le moyeu central comprend un élément d'extension (42) s'étendant vers l'avant des éléments porteurs auxquels sont fixés au moins certains des éléments de support.

5. Ensemble de support de pales de turbine selon l'une quelconque des revendications précédentes, dans lequel les éléments de support comprennent des câbles, des tiges, des tubes, des éléments d'angle ou toute autre structure allongée profilée de manière adaptée.

6. Ensemble de support de pales de turbine selon l'une quelconque des revendications précédentes, dans lequel chaque moyeu auxiliaire (30, 150) comprend des moyens d'actionnement (52, 164, 166, 168, 170) pour effectuer une rotation de la pale autour du moyeu auxiliaire respectif afin de modifier l'angle d'attaque des pales.

7. Ensemble de support de pales de turbine selon la revendication 6, dans lequel les moyens d'actionnement comprennent un moteur (52,164) et un agencement d'engrenage (166,168,170), le moteur étant monté de manière fixe sur l'un de la pale de turbine et du moyeu auxiliaire, et le composant (170) de l'agencement d'engrenage est monté de manière fixe sur l'autre de la pale de turbine et du moyeu auxiliaire.

8. Ensemble de support de pales de turbine selon la revendication 7, dans lequel l'agencement d'engrenage comprend une roue dentée (166) montée sur un arbre (168) s'étendant depuis le moteur et une crémaillère annulaire (170), la crémaillère annulaire constituant le composant précité de l'agencement d'engrenage.

9. Ensemble de support de pales de turbine selon l'une quelconque des revendications précédentes, dans lequel chaque élément porteur est sous la forme d'une entretoise et a une formation de profil aérodynamique.

10. Ensemble de support de pales de turbine selon la revendication 9, dans lequel la formation de profil aérodynamique comprend un volet pour modifier la portance sur la pale.

11. Éolienne incorporant un ensemble de support de pales de turbine selon l'une quelconque des revendications précédentes.
